# EUROPEAN PATENT APPLICATION

(11) **EP 4 746 264 A1**
(43) Date of publication of application: **20.05.2026**
(21) Application number: 25216054.4
(22) Date of filing: 14.11.2025
(51) Int. Cl.: H02K 9/19

(54) **AN AXIAL FLUX MACHINE AND A METHOD FOR COOLING AN AXIAL FLUX MACHINE**

(30) Priority: 18.11.2024 CN 202411641522
(71) Applicant: Bayerische Motoren Werke Aktiengesellschaft, 80809 München (DE)
(72) Inventor: Yuan, Koen, Beijing, 101318 (CN); Bode, Steffen, 80797 München (DE); Neumeyer, Richard Gabriel, 81543 München (DE); Zhang, Weimin, Beijing, 100070 (CN); HAN, Zhishan, Beijing, 101318 (CN); Wang, Jiebing, Shunyi District, Beijing, 101318 (CN)

(57) **Abstract**

The present invention provides an axial flux machine, comprising: a first rotor; a second rotor; a stator located between the first rotor and the second rotor; a first cover arranged outside the first rotor; a second cover arranged outside the second rotor; a first rotor shaft; and a second rotor shaft, wherein each of the first cover and the second cover comprises an oil pipe connected to an external oil pump, wherein each of the first rotor shaft and the second rotor shaft comprises: an oil channel; and a plurality of oil holes connected to the oil channel, wherein cooling oil can be fed into the oil channel from an external oil pump via an oil pipe, and sprayed from the plurality of oil holes to both surfaces of the corresponding rotor via the oil channel. In addition, the present invention further provides a method for cooling an axial flux machine. Through the present invention, the heat dissipation problem of the axial flux machine can be effectively solved, thereby significantly improving the heat dissipation efficiency of the axial flux machine, reducing the operating temperature of the axial flux machine, and extending the service life of the axial flux machine.

## Description

### FIELD OF THE INVENTION

The present disclosure relates to an electric machine, and more particularly, to an axial flux machine and a method for cooling an axial flux machine.

### BACKGROUND OF THE INVENTION

At present, most OEMs use Radial Flux Motor (RFM for short) in the electric drive system of new energy vehicles. However, RFM technology has encountered bottlenecks in improving power density, torque density, and bulk density. An innovative approach is to use Axial Flux Motor (AFM for short) to solve this problem.

Compared to RFM, AFM has many advantages in the electric vehicle design. For example, AFM can change the design approach of the power train system, move the electric machine from the axle to the inside of the wheel, provide more torque, lighter weight and so on. However, when the existing AFM is running at high power, it will cause the temperature of the electric machine to rise due to the difficulty of heat dissipation, thus affecting the performance and service life of the electric machine. The traditional heat dissipation method has a poor heat dissipation effect. Therefore, there is a need for a novel heat dissipation system and a heat dissipation method to solve this problem.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used to assist in determining the scope of the claimed subject matter.

In view of the drawbacks of the prior art, an object of the present invention is to provide an axial flux machine having a good heat dissipation effect and a method for efficiently cooling the axial flux machine.

According to a first aspect of the present invention, an axial flux machine is provided, which comprises: a first rotor; a second rotor; a stator located between the first rotor and the second rotor; a first cover arranged outside the first rotor; a second cover arranged outside the second rotor; a first rotor shaft passing through the first rotor for connecting to the stator; and a second rotor shaft passing through the second rotor for connecting to the stator, wherein each of the first cover and the second cover comprises an oil pipe connected to an external oil pump, wherein each of the first rotor shaft and the second rotor shaft comprises: an oil channel arranged in the respective rotor shaft; and a plurality of oil holes connected to the oil channel and arranged on the corresponding rotor shaft, wherein cooling oil may be fed into the oil channel from the external oil pump via the oil pipe, and sprayed from the plurality of oil holes to both surfaces of the corresponding rotor via the oil channel.

According to one embodiment, the plurality of oil holes may be evenly or unevenly arranged on the respective rotor shaft.

According to one embodiment, the diameter and the spraying pressure of the plurality of oil holes may be selected so that cooling oil may be uniformly sprayed onto both surfaces of the respective rotor.

According to one embodiment, the plurality of oil holes may be further configured to spray cooling oil onto the rotor surface when a temperature of the respective rotor exceeds a threshold value.

According to one embodiment, the plurality of oil holes may be further configured to spray cooling oil onto the rotor surface according to a vehicle speed.

According to one embodiment, the axial flux machine may be used as an electric drive for an electric vehicle.

According to one embodiment, the spraying (process) may be controlled by a computing device onboard the electric vehicle.

According to a second aspect of the present invention, a method for cooling an axial flux machine is provided, the axial flux machine comprising: a first rotor; a second rotor; a stator located between the first rotor and the second rotor; a first cover arranged outside the first rotor; a second cover arranged outside the second rotor; a first rotor shaft passing through the first rotor for connecting to the stator; and a second rotor shaft passing through the second rotor for connecting to the stator, wherein the method comprises: arranging an oil pipe connected to an external oil pump in each of the first cover and the second cover; arranging an oil channel in each of the first rotor shaft and the second rotor shaft, wherein the oil channel is connectable to the oil pipe; arranging a plurality of oil holes connected to the oil channel on each of the first rotor shaft and the second rotor shaft; and feeding cooling oil from the external oil pump into the oil channel via the oil pipe, and spraying the cooling oil from the plurality of oil holes onto both surfaces of the respective rotor via the oil channel.

According to one embodiment, the method may further comprise: spraying cooling oil onto the rotor surface via the plurality of cooling holes (e.g. for a predetermined time length) when a temperature of the respective rotor exceeds a threshold value.

According to one embodiment, the method may further comprise: spraying cooling oil onto the rotor surface via the plurality of cooling holes according to a vehicle speed.

According to a third aspect of the present invention, a vehicle comprising an axial flux machine of the present invention is provided.

Through the technology provided by the present invention, the heat dissipation problem of the axial flux machine may be effectively solved, thereby significantly improving the heat dissipation efficiency of the axial flux machine, reducing the operating temperature of the axial flux machine and prolonging the service life of the axial flux machine.

These and other features and advantages will become apparent from reading the following detailed description and with reference to the associated drawings. It is to be understood that the foregoing general description and the following detailed description are illustrative only and are not intended to limit the claimed aspects.

### BRIEF DESCRIPTION OF THE DRAWINGS

In order to be able to understand in detail the manner employed by the above-described features of the present disclosure, the contents briefly summarized above can be detailed described with reference to various embodiments, with some aspects illustrated in the accompanying drawings. It should be noted however that the drawings illustrate only certain typical aspects of the present disclosure and therefore should not be considered as limiting its scope since the description may allow for other equally valid aspects.
FIG. 1 illustrates a block diagram of various components and/or systems implemented in an exemplary vehicle.
FIG. 2 illustrates a schematic diagram of a conventional axial flux machine.
FIG. 3 illustrates a schematic diagram of an axial flux machine according to one embodiment of the present invention.
FIG. 4 illustrates a flowchart of a method for cooling an axial flux machine according to one embodiment of the present invention.
FIG. 5 illustrates a block diagram of an exemplary computing device according to one embodiment of the present invention.

### DETAILED DESCRIPTION

In the following detailed description, numerous specific details are set forth to provide a thorough understanding of the described exemplary embodiments. However, it will be apparent to those skilled in the art that the described embodiments may be practiced without some or all of these specific details. In other exemplary embodiments, well-known structures or processing steps are not described in detail in order to avoid unnecessarily obscuring the concepts of the present disclosure.

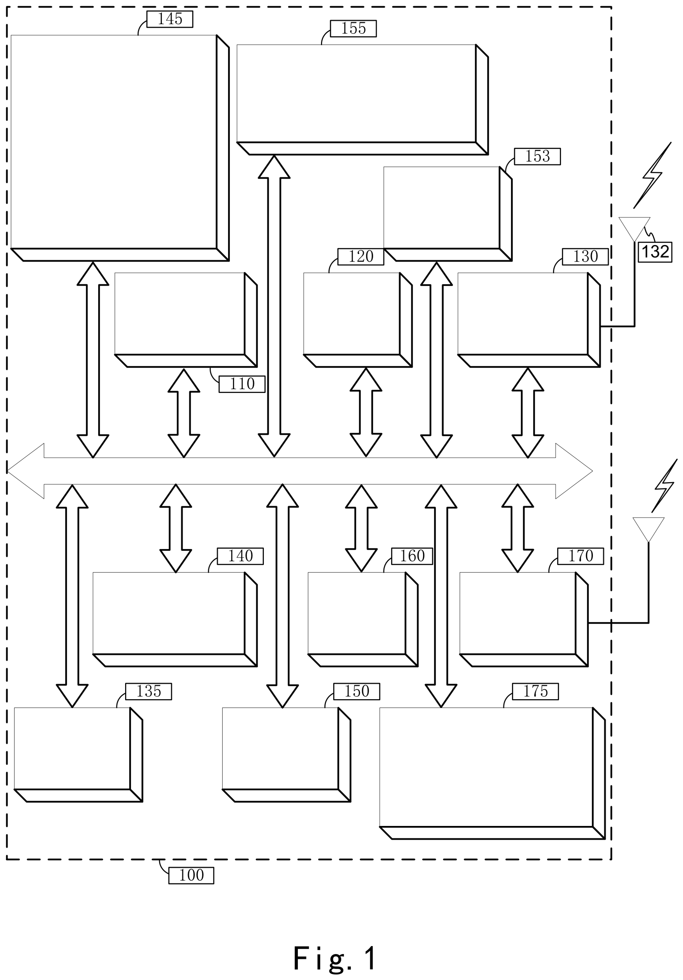

FIG. 1 illustrates a block diagram of various components and/or systems implemented in an exemplary vehicle 100.

The vehicle 100 may include one or more cameras 135. The camera may include a camera sensor and a mounting assembly. Different mounting assemblies may be used for different cameras on vehicle 100. For example, a front camera may be mounted in a front bumper, in a bar of a rearview mirror assembly, or in another front area of the vehicle 100. A rear camera may be mounted in a rear bumper/fender, on a rear windshield, in a trunk, or in another rear area of the vehicle. A side mirror may be mounted on the side of the vehicle 100, such as integrated into a mirror assembly or a door assembly. The camera may provide object detection and distance estimation (especially for objects of known size and/or shape), and may also provide information about rotational motion relative to an axis of the vehicle (such as during turning). When used in conjunction with other sensors, the camera can be calibrated to verify traveled distance and angular orientation by using other systems, such as by using LIDAR, distance sensors, etc. The camera may similarly be used to verify and calibrate other systems to verify that the distance measurement is correct, and also to verify that the object detection is performed accurately so that the object is mapped to the correct position relative to the vehicle by LIDAR and other systems accordingly. Similarly, when combined with, for example, an accelerometer, the time of collision with a road hazardous obstacle (e.g., the time elapsed before hitting a pothole) can be estimated.

In one embodiment, accelerometer, gyroscope, and magnetometer 140 may be used to provide and/or verify motion and direction information. Accelerometer and gyroscope may be used to monitor wheel and drive train performance. In one embodiment, the accelerometer may also be used to verify an actual collision time of a road hazardous obstacle, such as a pothole, relative to a predicted time based on existing braking and acceleration models and steering models. In one embodiment, the gyroscope and magnetometer may be used to measure the rotational state and orientation of a vehicle relative to the magnetic north, respectively, and to measure and calibrate an estimate and/or model of a turning radius at a current speed and/or a maneuverability metric at the current speed (especially when used in conjunction with measurements from other external and internal sensors, such as other sensors 145, such as speed sensors, and/or odometer measurements).

The Light Detection and Ranging (LIDAR) 150 subsystem uses pulsed lasers to measure a distance to an object. While a camera may be used for object detection, the LIDAR 150 provides a means to more certainly detect a distance (and orientation) of an object, especially with respect to an object of unknown size and shape. The LIDAR 150 measurements may also be used to estimate travel speed, vector direction, relative positioning, and braking distance by providing accurate distance measurements and incremental distance measurements.

Memory 160 may be used with processor 110 and/or digital signal processor (DSP) 120, and the memory may include flash memory, RAM, ROM, magnetic disk drive, or flash memory card or other memory device, or various combinations thereof. In one embodiment, memory 160 may contain instructions that implement various methods described throughout this specification. In one embodiment, the memory may contain instructions for operating and calibrating sensors, as well as receiving maps, weather, vehicle (both vehicle 100 and surrounding vehicles), and other data, and determining driving parameters (such as relative positioning, absolute positioning, braking distance, acceleration and turning radius at current speed and/or maneuverability at current speed, inter-vehicle distance, turning initiation/timing and execution, and initiation/timing of driving operations) using various internal and external sensor measurements and received data and measurements.

In one embodiment, power and drive system (generator, battery pack, transmission, engine) and related systems 175 and system 155 (brake, actuator, throttle control, steering and electrical) may be controlled by processor(s) and/or hardware or software or by an operator of a vehicle or some combination thereof. The system 155 (brake, actuator, throttle control, steering and electrical, etc.) as well as power and drive or other systems 175 may be utilized in conjunction with performance parameters and operational parameters to enable safe and accurate driving and operation of vehicle 100 autonomously (and manually, with respect to alarm and emergency override/braking/applying the brakes), such as merging traffic, stopping, accelerating, and otherwise operating vehicle 100 safely, effectively, and efficiently. In one embodiment, inputs from various sensor systems, such as camera 135, accelerometer, gyroscope and magnetometer 140, LIDAR 150, GNSS receiver 170, radar 153, inputs, messaging, and/or measurements from wireless transceiver (s) 130 and/or other sensors 145 or various combinations thereof, may be used by processor 110 and/or DSP 120 or other processing systems to control the power and drive system 175 and system (brake, actuator, throttle control, steering, and electrical) 155.

Global Navigation Satellite System (GNSS) receiver may be used to determine positioning relative to the ground (absolute positioning), and when used with other information, such as measurement and/or mapping data from other objects, may be used to determine positioning relative to other objects, such as relative to other vehicles and/or relative to the road surface.

In one embodiment, the GNSS receiver 170 may support one or more GNSS constellations and other satellite-based navigation systems. For example, in one embodiment, the GNSS receiver 170 may support a global navigation satellite system, such as Global Positioning System (GPS), Russian Global Navigation Satellite System (GLONASS), Galileo, and/or Beidou, or any combination thereof. In one embodiment, the GNSS receiver 170 may support regional navigation satellite systems (such as NAVIC or QZSS or a combination thereof) as well as various augmentation systems (e.g., satellite-based augmentation systems (SBAS) or groundbased augmentation systems (GBAS)), such as Doppler Orbitography and Radiopositioning Integrated by Satellite (DORIS) or Wide Area Augmentation System (WAAS) or European Geostationary Navigation Overlay Service (EGNOS) or Multi-functional Satellite Augmentation System (MSAS) or Local Area Augmentation System (LAAS). In one embodiment, the GNSS receiver(s) 130 and antenna(s) 132 may support multiple frequency bands and sub-bands, such as GPS L1, L2, and L5 bands, Galileo E1, E5, and E6 bands, Compass (Beidou) B1, B3, and B2 bands, GLONASS G1, G2 and G3 bands, and QZSS L1C, L2C, and L5-Q bands.

The GNSS receiver 170 may be used to determine position and relative position that may be used for positioning, navigation, and to calibrate other sensors when appropriate, such as to determine a distance between two points in time under clear sky condition and to use the distance data to calibrate other sensors (such as odometer and/or LIDAR). In one embodiment, GNSS-based relative position based, for example, on shared Doppler and/or pseudorange measurements between vehicles, may be used to determine a highly accurate distance between two vehicles, and when combined with vehicle information, such as shape and model information and GNSS antenna positions, may be used to calibrate, verify, and/or influence confidence levels associated with information from LIDAR, camera, radar, sonar, and other range estimation techniques. GNSS Doppler measurements may also be used to determine linear and rotational motions of a vehicle or vehicle relative to another vehicle, which may be used in conjunction with gyroscope and/or magnetometer and other sensor systems to maintain calibration of those systems based on measured position data. The relative GNSS positioning data may also be combined with a high-confidence absolute position from a roadside device (also referred to as a roadside unit or RSU) to determine a high-confidence absolute position of the vehicle. Furthermore, relative GNSS positioning data may be used to avoid other vehicles and stay within lanes or other allocated road areas during severe weather that may obscure LIDAR and/or camera-based data sources. For example, using an RSU equipped with a GNSS receiver and V2X capability, GNSS measurement data may be provided to a vehicle, which, when provided together with an absolute position of the RSU, may be used to navigate the vehicle relative to a map, thereby keeping the vehicle in a lane and/or on the road despite the lack of visibility.

Radio detection and ranging (radar 153) uses transmitted radio waves reflected from an object. The reflected radio waves are analyzed based on the time required for the reflection to arrive and other signal characteristics of the reflected waves to determine the position of nearby objects. The radar 153 may be used to detect the position of nearby cars, roadside objects (signs, other vehicles, pedestrians, etc.), and is generally capable of detecting objects even in the presence of fuzzy weather (such as snow, rain, or hail). Thus, the radar 153 may be used to supplement the LIDAR 150 system and the camera 135 in providing ranging information to other objects by providing ranging and distance measurements and information when vision-based systems typically fail. Furthermore, the radar 153 may be used to calibrate and/or sanity check other systems, such as LIDAR 150 and camera 135. The ranging measurements from the radar 153 may be used to determine/measure braking distance at a current speed, acceleration, maneuverability at the current speed and/or turning radius at the current speed and/or maneuverability metric at the current speed. In some systems, ground penetrating radar may also be used to track the road surface via, for example, radar reflection markings on the road surface or terrain features such as ditches.

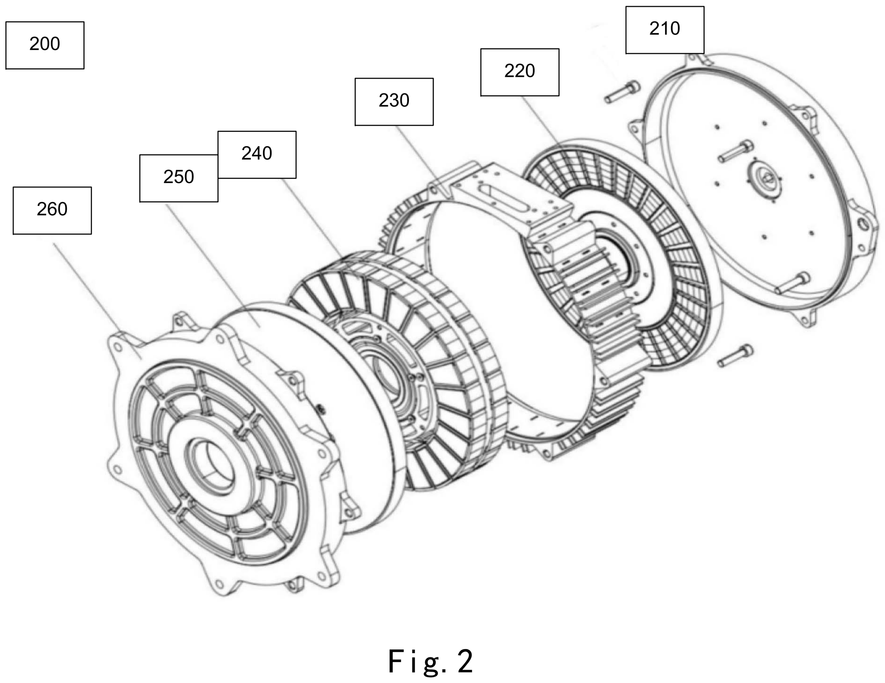

FIG. 2 illustrates a schematic diagram of a conventional axial flux machine 200. It should be noted that FIG. 2 is for illustrative purposes only, and an actual axial flux machine may include more or fewer components than those described in FIG. 2.

As shown in FIG. 2, the axial flux machine 200 may be, for example, a dual-rotor single-stator axial flux machine, and may include a first rotor 220, a second rotor 250, and a stator 240 located between the first rotor 220 and the second rotor 250. In addition, the axial flux machine 200 may further include a machine housing 230, a first cover 210 arranged outside the first rotor 220, and a second cover 260 arranged outside the second rotor 250. Thereby, the first rotor 220, the second rotor 250, and the stator 240 may be arranged in an inner cavity formed by the first cover 210, the second cover 260, and the machine housing 230.

As mentioned above, when a conventional axial flux machine is running at high power, the machine temperature will rise due to heat dissipation difficulty (especially heat dissipation difficulty of the rotor magnet of the main heat source), which will affect the performance and service life of the machine. Therefore, the present invention proposes a novel heat dissipation system and a heat dissipation method to solve this problem.

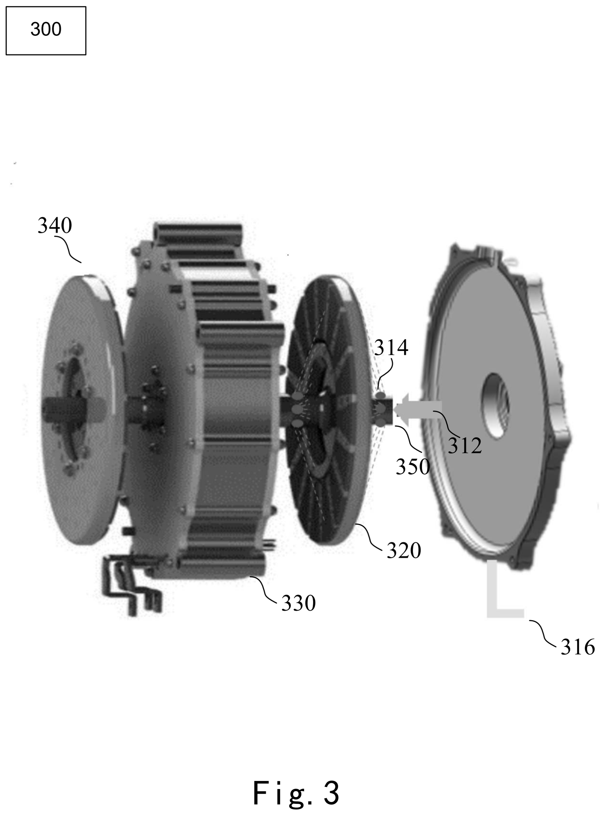

FIG. 3 illustrates a schematic diagram of an axial flux machine 300 according to one embodiment of the present invention. It should be noted that FIG. 3 is for illustrative purposes only, and an actual axial flux machine may include more or fewer components than those described in FIG. 3.

As shown in FIG. 3, the axial flux machine 300 may include a first rotor 320, a second rotor 340, and a stator 330 located between the first rotor 320 and the second rotor 340. The axial flux machine 300 may further include a first cover 310 arranged outside the first rotor 320, and a second cover (not shown in FIG. 3) arranged outside the second rotor 340. In addition, the axial flux machine 300 may further include a first rotor shaft 350 passing through the first rotor 320 (e.g., through a center of the first rotor 320) for connecting to the stator 330 (e.g., to the stator shaft), and a second rotor shaft passing through the second rotor 340 (e.g., through a center of the second rotor 340) for connecting to the stator 330 (e.g., to the stator shaft).

In one embodiment, the first cover 310 may include an oil pipe 316 connected to an external oil pump (not shown). An oil channel 312 for receiving and transporting cooling oil may be provided in the first rotor shaft 350. When the first cover 310 is connected to the first rotor shaft 350, the oil channel 312 may be connected to the oil pipe 316 in the first cover 310. As a result, the cooling oil can be fed into the oil channel 312 from the external oil pump via the oil pipe 316. Further, the first rotor shaft 350 may be provided with a plurality of oil holes 314 connected to the oil channel 312. The plurality of oil holes 314 may be evenly or unevenly arranged on the first rotor shaft 350 (e.g., on the outer circumference of the first rotor shaft 350), and may be designed to simultaneously spray cooling oil from both sides of the first rotor 320 onto both surfaces of the first rotor 320 (e.g., the left side surface and the right side surface as shown in FIG. 3). In one embodiment, the diameter and the spraying pressure of the plurality of oil holes 314 may be selected so that cooling oil can be uniformly sprayed from the plurality of oil holes 314 onto both surfaces of the first rotor 320 in order to evenly cool the first rotor 320 (e.g., magnet of the first rotor 320).

In one embodiment, a temperature sensor may be utilized to detect the temperature of the rotor surface, and when the temperature of the rotor surface exceeds a threshold, an external oil pump may be controlled to feed cooling oil into the oil channel 312 to spray cooling oil onto both surfaces of the first rotor 320 via the plurality of oil holes 314 (e.g., for a predetermined time length) in order to cool the first rotor 320. In another embodiment, the plurality of oil holes 312 may be controlled to spray cooling oil onto both surfaces of the first rotor 320 at a predetermined time interval (e.g., 1s, 2s, etc.). In yet another embodiment, the cooling oil may be sprayed onto the rotor surface according to a vehicle speed. For example, if the vehicle speed is high, it means that the machine 300 is running at a high speed, and thus it is necessary to spray cooling oil onto the rotor surface in order to cool the rotor surface.

Similarly, the second cover may include an oil pipe connected to an external oil pump. The second rotor shaft may comprise an oil channel arranged in the second rotor shaft; and a plurality of oil holes connected to the oil channel and arranged on the second rotor shaft. The working principle thereof is the same as that described above with respect to the first cover 310, the first rotor 320, the first rotor shaft 350, the oil pipe 316, the oil channel 312, and the oil holes 314, and will not be repeated here.

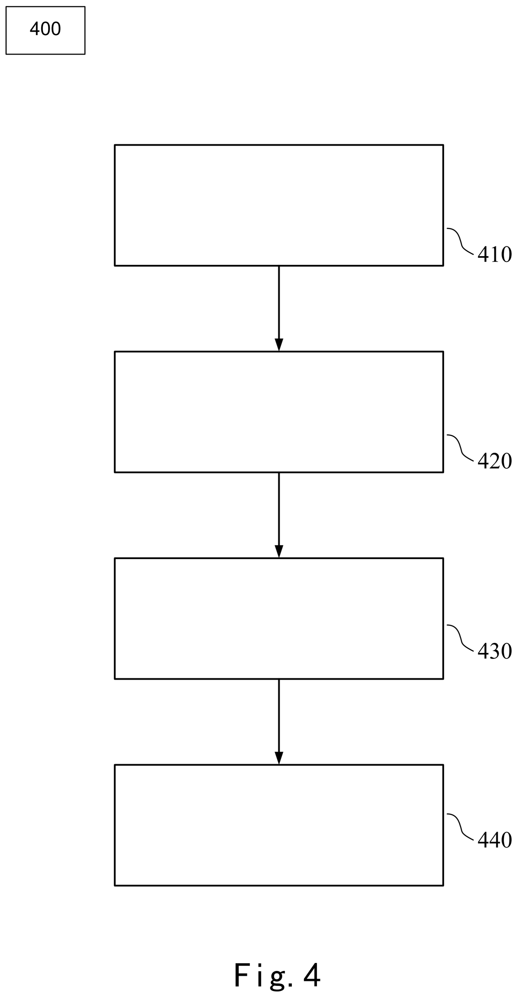

FIG. 4 illustrates a flowchart of a method 400 for cooling an axial flux machine according to one embodiment of the present invention. The axial flux machine may include: a first rotor; a second rotor; a stator located between the first rotor and the second rotor; a first cover arranged outside the first rotor; a second cover arranged outside the second rotor; a first rotor shaft passing through the first rotor for connection to the stator; and a second rotor shaft passing through the second rotor for connection to the stator.

At block 410, the method 400 may include arranging an oil pipe (e.g., oil pipe 316 as shown in FIG. 3) connected to an external oil pump in each of the first cover and the second cover.

At block 420, the method 400 may include arranging an oil channel (e.g., oil channel 312 as shown in FIG. 3) in each of the first rotor shaft and the second rotor shaft, wherein the oil channel is connectable to the oil pipe.

At block 430, the method 400 may include arranging a plurality of oil holes (e.g., oil holes 314 as shown in FIG. 3) connected to the oil channel on each of the first rotor shaft and the second rotor shaft;
At block 440, the method 400 may include feeding cooling oil from the external oil pump into the oil channel via the oil pipe, and spraying the cooling oil from the plurality of oil holes onto both surfaces of the respective rotor via the oil channel.

In one embodiment, the method 400 may further include spraying cooling oil onto the rotor surface via the plurality of oil holes (e.g., for a predetermined time length) when a temperature of the respective rotor exceeds a threshold.

In one embodiment, the method 400 may further include spraying cooling oil onto the rotor surface via the plurality of oil holes according to a vehicle speed.

The axial flux machine and the method for cooling the axial flux machine according to the present invention have been described in detail above with reference to FIGS. 3-4, and the heat dissipation problem of the axial flux machine is effectively solved by cleverly designing a cooling oil spray mechanism for the axial flux machine (for example, providing an oil channel in the rotor shaft and providing oil holes on the rotor shaft so that the cooling oil can be sprayed from both sides simultaneously to both surfaces of the respective rotor), thereby significantly improving the heat dissipation efficiency of the axial flux machine, lowering the operating temperature of the axial flux machine, and prolonging the service life of the axial flux machine.

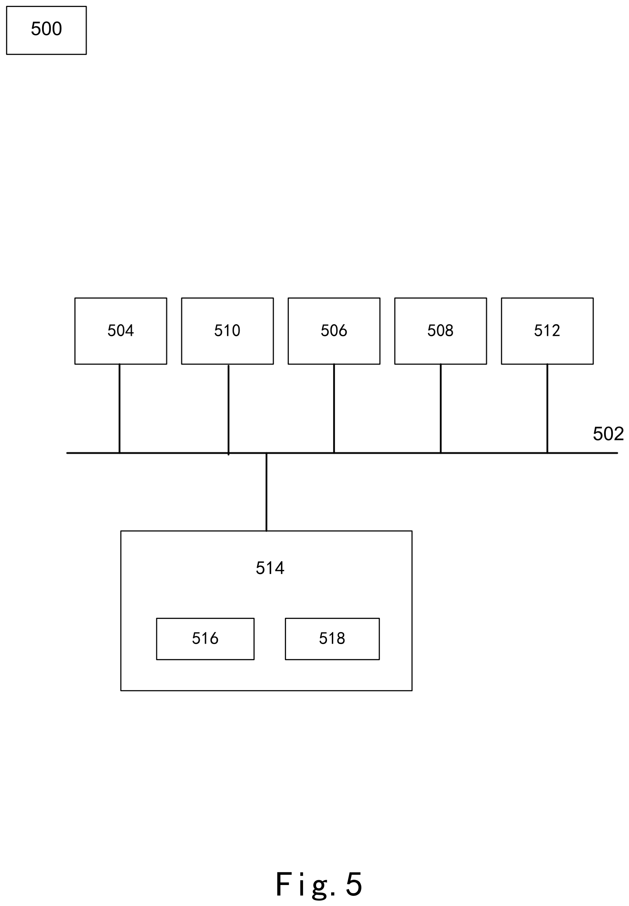

Referring to FIG. 5, a computing device 500 that is one example of a hardware device (e.g., user equipment, cloud server, vehicle control unit, etc.) applicable to aspects of the present invention will now be described. The computing device 500 may be any machine that may be configured for implementing processing and/or computing, and may be, but is not limited to, a workstation, a server, a desktop computer, a laptop computer, a tablet computer, a personal digital processing device, a smartphone, an in-vehicle computer, or any combination thereof. The various methods/apparatuses/servers/user equipments described above may be implemented in whole or at least in part by the computing device 500 or similar devices or systems.

Computing device 500 may include components that may be connected or communicated via one or more interfaces and bus 502. For example, the computing device 500 may include a bus 502, one or more processors 504, one or more input devices 506, and one or more output devices 508. The one or more processors 504 may be any type of processor and may include, but are not limited to, one or more general-purpose processors and/or one or more special-purpose processors (e.g., specialized processing chips). The input device 506 may be any type of device capable of inputting information to a computing device and may include, but is not limited to, a mouse, a keyboard, a touch screen, a microphone, and/or a remote controller. The output device 508 may be any type of device capable of presenting information and may include, but is not limited to, a display, a speaker, a video/audio output terminal, a vibrator, and/or a printer. The computing device 500 may also include or be connected with a non-transitory storage device 510, which may be non-transitory and any storage device capable of data storage, and may include, but is not limited to, a magnetic disk drive, an optical storage device, a solid state memory, a floppy disk, a flexible magnetic disk, a hard disk, a magnetic tape or any other magnetic medium, an optical disk or any other optical medium, a ROM (read only memory), a RAM (random access memory), a cache memory, and/or any memory chip or cassette tape and/or any other medium from which a computer can read data, instructions, and/or code. The non-transitory storage device 510 may be separate from an interface. The non-transitory storage device 510 may have data/instructions/code for implementing the methods and steps described above. The computing device 500 may also include a communication device 512. The communication device 512 may be any type of device or system capable of communicating with internal devices and/or communicating with a network and may include, but is not limited to, a modem, a network card, an infrared communication device, a wireless communication device, and/or a chipset, such as a Bluetooth device, an IEEE 1302.11 device, a WiFi device, a WiMax device, a cellular communication device, and/or the like.

When the computing device 500 is used as an in-vehicle device, it may also be connected with external devices (e.g., GPS receivers, sensors for sensing different environmental data such as acceleration sensor, wheel speed sensor, gyroscope, etc.). In this manner, the computing device 500 may receive positioning data and sensor data indicative of vehicle driving conditions, for example. When the computing device 500 is used as an in-vehicle device, it may also be connected with other devices for controlling the travel and operation of the vehicle (e.g., an engine system, a wiper, an anti-lock braking system, a light control system, etc.).

Further, the non-transitory storage device 510 may have map information and software components so that the processor 504 may implement route guidance processing. Further, the output device 506 may include a display for displaying a map, displaying a positioning marker of the vehicle, and displaying an image indicating a traveling condition of the vehicle. The output device 506 may also include a speaker or a headphone interface for audio guidance.

The bus 502 may include, but is not limited to, an Industry Standard Architecture (ISA) bus, a Microchannel Architecture (MCA) bus, an Enhanced ISA (EISA) bus, a Video Electronics Standards Association (VESA) local bus, and a Peripheral Component Interconnect (PCI) bus. In particular, for in-vehicle devices, the bus 502 may also include a Controller Area Network (CAN) bus or other structures designed for applications on automobiles.

The computing device 500 may also include a working memory 514, which may be any type of working memory capable of storing instructions and/or data that facilitates the work of the processor 504 and may include, but is not limited to, a random access memory and/or a read-only storage device.

Software components may be located in the working memory 514, including, but not limited to, operating system 516, one or more application programs 518, drivers, and/or other data and code. Instructions for implementing the methods and steps described above may be included in the one or more application programs 518, and the modules/units/components of the various devices/servers/user equipments described above may be implemented by the processor 504 reading and executing the instructions of the one or more application programs 518.

It should also be recognized that variations can be made according to specific needs. For example, custom hardware may also be used, and/or specific components may be implemented in hardware, software, firmware, middleware, microcode, hardware description speech, or any combination thereof. Furthermore, connections to other computing devices, such as network input/output devices, etc. may be employed. For example, some or all of the disclosed methods and apparatus may be implemented with logic and algorithms according to the present invention by programming hardware (e.g., programmable logic circuits including field programmable gate arrays (FPGAs) and/or programmable logic arrays (PLAs)) having an assembly language or hardware programming language (e.g., VERILOG, VHDL, C + +).

Although aspects of the present invention have been described so far with reference to the accompanying drawings, the methods, systems, and apparatuses described above are merely examples, and the scope of the present invention is not limited to these aspects, but is defined only by the appended claims and their equivalents. Various components may be omitted or replaced with equivalent components. In addition, the steps may be implemented in an order different from that described in the present invention. Furthermore, various components may be combined in various ways. It is also important that many of the described components may be replaced with equivalent components that appear later as the technology develops.

## Claims

1. An axial flux machine, comprising:
a first rotor;
a second rotor;
a stator located between the first rotor and the second rotor;
a first cover arranged outside the first rotor;
a second cover arranged outside the second rotor;
a first rotor shaft passing through the first rotor for connecting to the stator; and
a second rotor shaft passing through the second rotor for connecting to the stator,
wherein each of the first cover and the second cover comprises an oil pipe connected to an external oil pump,
wherein each of the first rotor shaft and the second rotor shaft comprises:
an oil channel arranged in the respective rotor shaft; and
a plurality of oil holes connected to the oil channel and arranged on the corresponding rotor shaft,
wherein cooling oil can be fed into the oil channel from the external oil pump via the oil pipe, and sprayed from the plurality of oil holes to both surfaces of the corresponding rotor via the oil channel.

2. The axial flux machine of claim 1, wherein the plurality of oil holes are evenly arranged on the respective rotor shaft.

3. The axial flux machine of claim 1, wherein the diameter and the spraying pressure of the plurality of oil holes are selected so that cooling oil can be uniformly sprayed onto both surfaces of the respective rotor.

4. The axial flux machine of claim 1, wherein the plurality of oil holes are further configured to spray cooling oil onto the rotor surface when a temperature of the respective rotor exceeds a threshold value.

5. The axial flux machine of claim 1, wherein the plurality of oil holes are further configured to spray cooling oil onto the rotor surface according to a vehicle speed.

6. The axial flux machine of claim 1, wherein the axial flux machine is used as an electric drive for an electric vehicle.

7. The axial flux machine of claim 6, wherein the spraying is controlled by a computing device onboard the electric vehicle.

8. A method for cooling an axial flux machine, the axial flux machine comprising:
a first rotor;
a second rotor;
a stator located between the first rotor and the second rotor;
a first cover arranged outside the first rotor;
a second cover arranged outside the second rotor;
a first rotor shaft passing through the first rotor for connecting to the stator; and
a second rotor shaft passing through the second rotor for connecting to the stator,
wherein the method comprises:
arranging an oil pipe connected to an external oil pump in each of the first cover and the second cover;
arranging an oil channel in each of the first rotor shaft and the second rotor shaft, wherein the oil channel is connectable to the oil pipe;
arranging a plurality of oil holes connected to the oil channel on each of the first rotor shaft and the second rotor shaft; and
feeding cooling oil from the external oil pump into the oil channel via the oil pipe, and spraying the cooling oil from the plurality of oil holes onto both surfaces of the respective rotor via the oil channel.

9. The method of claim 8, wherein the plurality of oil holes are evenly arranged on the respective rotor shaft.

10. The method of claim 8, wherein the diameter and the spraying pressure of the plurality of oil holes are selected so that cooling oil can be uniformly sprayed onto both surfaces of the respective rotor.

11. The method of claim 8, further comprising:
spraying cooling oil onto the rotor surface via the plurality of cooling holes when a temperature of the respective rotor exceeds a threshold value.

12. The method of claim 8, further comprising:
spraying cooling oil onto the rotor surface via the plurality of cooling holes according to a vehicle speed.

13. The method of claim 8, wherein the axial flux machine is used as an electric drive for an electric vehicle.

14. The method of claim 13, wherein the spraying is controlled by a computing device onboard the electric vehicle.

15. A vehicle comprising an axial flux machine according to any of claims 1-7.
